# FASCICULE DE BREVET EUROPEEN

(11) **EP 0 480 877 B1**
(45) Date de publication et mention de la délivrance du brevet: **13.12.1995**
(21) Numéro de dépôt: 91810776.4
(22) Date de dépôt: 02.10.1991
(51) Int. Cl.: A21C 9/00, A21D 10/02, B65D 85/36

(54) **Conditionnement de pâte prête à l'emploi**
Verpackung für Fertigteig
Packaging for ready-to-use dough

(30) Priorité: 10.10.1990 CH 3262/90
(43) Date de publication de la demande: 15.04.1992
(73) Titulaire: ECLAIR VUILLEUMIER S.A., CH-1024 Ecublens (CH)
(72) Inventeur: Vuilleumier, Roland, CH-1024 Ecublens (CH); Vuilleumier, Norbert, CH-1024 Ecublens (CH)
(74) Mandataire: Ganguillet, Cyril

(56) Documents cités:
- EP-A- 0 133 757
- WO-A-87/00506
- FR-A- 2 344 468
- FR-A- 2 533 806
- US-A- 2 829 057
- US-A- 3 379 536
- US-A- 4 265 919

## Description

La présente invention concerne un conditionnement de pâte prête à l'emploi.

La confection de tartes, de pizzas et de préparations similaires exige en principe la conjonction de quatre facteurs. Le premier de ces facteurs est évidemment le savoir-faire, le deuxième facteur est la place nécessaire à la manipulation et la préparation de la pâte, le troisième facteur est le temps nécessaire à cette préparation et, finalement, le dernier facteur est le matériel nécessaire, tel que rouleau à pâte, plaque à gâteau, etc.

Dans l'habitat moderne, les cuisines se caractérisent par une multiplication des équipements électroménagers et par une réduction sensible de la surface des plans de travail à disposition.

Cette évolution, de même que la réduction manifeste du temps consacré à la préparation des repas, rend la confection de tartes, pizzas et préparations similaires de moins en moins aisée. Pour permettre au consommateur de réaliser malgré tout des préparations de ce type, des propositions ont été faites pour offrir dans le commerce des pâtes laminées prêtes à l'emploi. Le brevet européen no 0158590 est tout à fait représentatif de ce type de propositions et porte sur une pâte laminée prête à l'emploi enroulée avec un papier de protection supportant les températures de cuisson au four et permettant une manipulation plus aisée de la pâte.

On peut relever que la pâte prête à l'emploi telle que définie ci-dessus permet de remédier à l'absence de deux des facteurs mentionnés plus haut. En effet, il est bien clair qu'aucun savoir-faire particulier n'est nécessaire pour la réalisation de cette pâte, puisqu'elle est déjà prête. De la même façon, la place qui aurait été nécessaire pour étaler la pâte et la passer au rouleau n'est évidemment plus indispensable. Dans une moindre mesure, le temps nécessaire à la préparation est raccourci par l'utilisation d'une telle pâte prête à l'emploi. On relèvera cependant que l'opération qui consiste à foncer la pâte dans une plaque à gâteau, à éliminer les chutes de pâte et à couper le papier de cuisson aux dimensions de la plaque n'est évidemment pas instantanée. On notera également que les chutes représentent un gaspillage et qu'il faut malgré tout posséder une plaque à gâteau, laquelle nécessite une place de rangement, et être prêt à la nettoyer après l'emploi.

Depuis plus de vingt ans, la ménagère peut trouver dans le commerce des fonds de tartes ou de tartelettes prêts à être mangés, comme par exemple des fonds en biscuit de farine complète (graham cracker), qu'elle utilise pour la confection de tartelettes ou de petites tartes, par exemple aux fraises, en disposant simplement les fraises sur le fond de tarte, avec un peu de sirop ou de confiture. Des fonds de tartes de ce genre sont par exemple mentionnés dans le brevet américain no 3,379,536 et dans la demande de brevet européen publiée no 0133757, qui concernent des dispositifs d'emballage rigides pouvant contenir plusieurs fonds de tartes, destinés à leur transport et notamment à éviter que ces fonds ne s'émiettent.

Cependant, les propositions mentionnées ci-dessus ne permettent pas de réaliser de véritables tartes, pizzas, croustades ou autres préparations similaires.

Une ébauche de solution est donnée dans le brevet américain no 2,829,057. Ce document concerne un conditionnement de pâte prête à l'emploi comportant une pâte non cuite foncée sur un support approprié à la cuisson de la pâte au four. Toutefois, ce brevet ne donne aucune indication quant au support à utiliser.

Le but de la présente invention est de remédier à l'absence de l'un, de plusieurs ou de tous les facteurs mentionnés plus haut. En d'autres termes, la présente invention permet de réaliser tartes, pizzas et préparations similaires sans aucun savoir-faire, sans nécessiter un plan de travail, sans aucun temps de préparation, soit instantanément, et finalement sans autre matériel qu'un simple four, car il reste nécessaire de cuire la pâte.

A cet effet, l'invention concerne un conditionnement de pâte prête à l'emploi, tel qu'exposé à la revendication 1. D'autres caractéristiques de l'invention sont énoncées dans les revendications subordonnées à la revendication 1.

On décrit ci-après un exemple de réalisation du conditionnement de pâte prête à l'emploi selon l'invention, en se référant au dessin annexé, sur lequel:
- la fig.1: est une vue schématique depuis dessus d'un exemple de conditionnement selon l'invention avant emballage,
- la fig 2: est une coupe partielle selon A-A du conditionnement de la figure 1,
- la fig.3: est une coupe partielle d'un mode de réalisation du support en forme de plaque à gâteau, et
- la fig.4: est un détail du fond du support représenté à la figure 3.

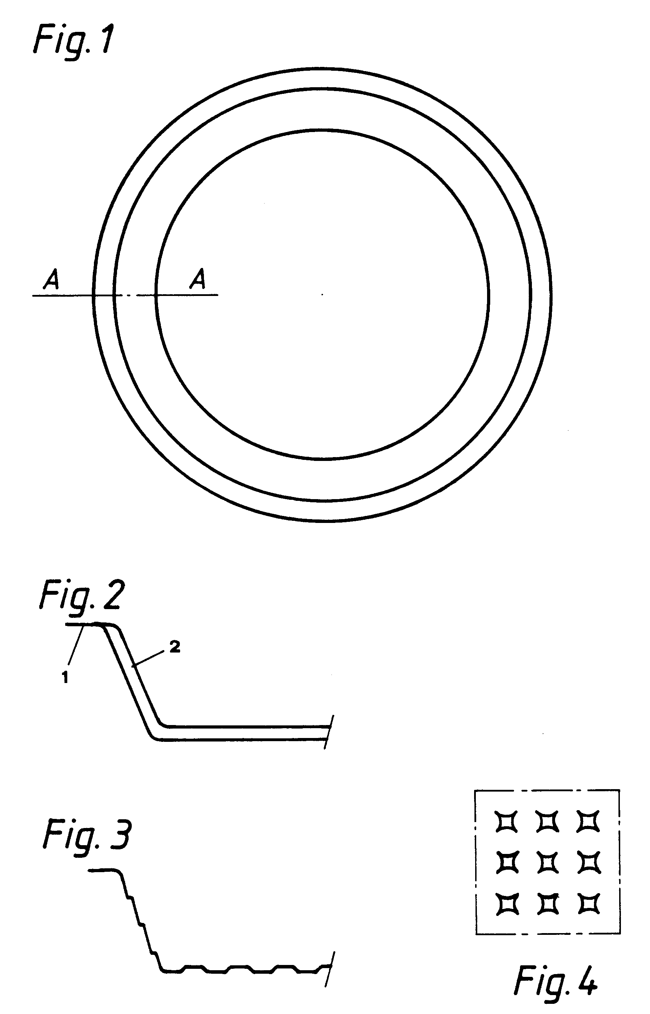

On a représenté sur les figures 1 et 2 une pâte 1 foncée sur un support 2 en forme de plaque à gâteau ronde. Cet ensemble est emballé, puis ensuite proposé à la ménagère comme un produit fini, directement et totalement prêt à l'emploi.

Le support 2 est réalisé en PET (Polyéthylène téréphtalate cristallisé), qui supporte une cuisson de 220° et qui est une matière recyclable et non polluante lors de sa destruction, et qui présente en outre l'avantage d'un facile démoulage de la tarte après cuisson, car la pâte ne colle pas sur le PET.

Le fond du support peut comporter un profilage, par exemple du type nid d'abeille ou alvéolaire, comme représenté sur les figures 3 et 4, et qui constitue un renforcement important du support, tout en permettant de réduire notablement l'épaisseur de la matière constituant le support et par là de réduire son poids et son prix. Les bords du support peuvent également comporter un profilage, également du type nid d'abeille ou comporter des stries ou replats comme représenté à la figure 3. Ce profilage des bords permet une meilleure adhérence de la pâte et par là d'éviter son retrait lors de la cuisson. Bien entendu, le support peut également être réalisé avec un fond et des bords lisses.

La pâte peut être foncée sur le support après avoir été laminée ou par emboutissage ou de toute autre façon adéquate. Le conditionnement peut être réalisé avec toutes les pâtes utilisées habituellement, qu'elles soient brisées, feuilletées ou sucrées, selon des proportions très variables des ingrédients principaux, ces proportions étant par exemple choisies entre 20 et 30 % pour les matières grasses, 40 et 60 % pour les farines, 10 et 25 % pour l'eau et 1 et 2% pour le sel, par exemple selon la recette suivante: 25.7% de matières grasses, 50.8% de farines, 22.2% d'eau et 1.3% de sel. On ajoutera de préférence un élément conservateur à la pâte, comme par exemple du sorbate de potassium à 600 milligrammes par kilo de pâte. Les valeurs ci-dessus ne sont bien entendu pas limitatives.

Afin de permettre une conservation optimale de la pâte, l'ensemble composé de la pâte foncée dans son support est de préférence emballé dans un emballage étanche à l'air et à la vapeur d'eau, et qui peut être transparent. Le conditionnement peut être emballé sous atmosphère dirigée, par exemple en remplaçant l'oxygène par un mélange d'azote et de CO₂ (par exemple 41% d'azote et 59% de CO₂). Il peut également être emballé sous vide. Le conditionnement peut également être présenté sous forme congelée.

Le produit fini que constitue la pâte non cuite déjà foncée sur un support en forme de plaque et pouvant être directement mis au four permet non seulement de réduire au strict minimum le travail de la ménagère, mais encore garantit la mise à disposition de la ménagère d'une pâte foncée d'épaisseur constante et sans risque de déchirure. Il suffit à la ménagère d'y disposer les ingrédients de la tarte, de la pizza ou autre croustade ou gâteau qu'elle souhaite réaliser, puis de placer le tout dans son four. Après la cuisson, il suffit de retirer la tarte ou le gâteau de son support et, le cas échéant, de jeter le support.

Le support du conditionnemnt représenté sur les figures est de forme ronde. Bien entendu, ce support peut avoir également toutes autres formes, telles que par exemple une forme carrée, rectangulaire, ovale, triangulaire, ou toute autre forme polygonale. Ses dimensions peuvent être choisies tout à fait librement, pourvu qu'elles restent inférieures aux dimensions intérieures d'un four du type courant, et selon que l'on désire ou non pouvoir disposer côte-à-côte plusieurs tartes ou autres gâteaux dans le four.

## Revendications

1. Conditionnement de pâte prête à l'emploi, comportant une pâte non cuite foncée sur un support approprié à la cuisson de la pâte au four, caractérisé en ce que le support est réalisé en polyéthylène téréphtalate (PET).

2. Conditionnement selon la revendication 1, caractérisé en ce qu'il comprend en outre un emballage étanche à l'air et à la vapeur d'eau.

3. Conditionnement selon l'une des revendications précédentes, caractérisé en ce que le fond du support comporte un profilage.

4. Conditionnement selon l'une des revendications précédentes, caractérisé en ce que les bords du support comportent un profilage.

## Claims

1. Packaging for ready-to-use pastry involving an uncooked pastry pressed into the bottom of a dish suitable for baking the pastry in the oven, characterized in that the dish is made of polyethylene terephthalate (PET).

2. Packaging according to Claim 1, characterized in that it also includes packing material which is impermeable to air and steam.

3. Packaging according to one of the preceding claims, characterized in that the bottom of the dish is shaped.

4. Packaging according to one of the preceding claims, characterized in that the sides of the dish are shaped.

## Patentansprüche

1. Verpackung für Fertigteig mit einem rohen Teig, der auf einem für den Backvorgang des Teiges im Ofen geeigneten Untersatz angeordnet ist, dadurch gekennzeichnet, daß der Untersatz aus Polyethylenterephtalat (PET) besteht.

2. Verpackung nach Anspruch 1, dadurch gekennzeichnet, daß sie außerdem eine luftdichte und wasserdichte Umhüllung aufweist.

3. Verpackung nach einem der vorhergehenden Ansprüche, dadurch gekennzeichnet, daß der Boden des Untersatzes profiliert ist.

4. Verpackung nach einem der vorhergehenden Ansprüche, dadurch gekennzeichnet, daß die Ränder des Untersatzes profiliert sind.
